# EUROPÄISCHE PATENTSCHRIFT

(11) **EP 0 925 707 B1**
(45) Veröffentlichungstag und Bekanntmachung des Hinweises auf die Patenterteilung: **18.05.2005**
(21) Anmeldenummer: 97944686.1
(22) Anmeldetag: 09.09.1997
(51) Int. Cl.: H04Q 11/04, H04Q 7/24

(54) **VERFAHREN ZUM ÜBERTRAGEN VON DATEN IN EINEM HYBRIDEN TELEKOMMUNIKATIONSSYSTEM, INSBESONDERE EINEM "ISDN -- DECT-SPEZIFISCHEN RLL/WLL"-SYSTEM**
PROCESSES FOR TRANSMISSION OF DATA IN A HYBRID TELECOMMUNICATIONS SYSTEM, PARTICULARLY AN ISDN -- DECT-SPECIFIC RLL/WLL SYSTEM
PROCEDES POUR TRANSMETTRE DES DONNEES DANS UN SYSTEME DE TELECOMMUNICATION HYBRIDE, NOTAMMENT UN SYSTEME "ISDN -- RLL/WLL SPECIFIQUE-DECT"

(30) Priorität: 10.09.1996 DE 19636744
(43) Veröffentlichungstag der Anmeldung: 30.06.1999
(73) Patentinhaber: SIEMENS AKTIENGESELLSCHAFT, 80333 München (DE)
(72) Erfinder: KAMPERSCHROER, Erich, D-46499 Hamminkeln (DE); KORDSMEYER, Martin, D-48477 Hörstel (DE)
(86) Internationale Anmeldenummer: PCT/DE1997/002003
(87) Internationale Veröffentlichungsnummer: WO 1998/011759

(56) Entgegenhaltungen:
- WO-A-93/21719
- DE-A- 19 625 142
- US-A- 5 463 628
- WAH HING I P ET AL: "CORDLESS ACCESS TO THE ISDN BASIC RATE SERVICE" TENTH UK TELETRAFFIC SYMPOSIUM, 1.Januar 1993, MARTLESHAM HEATH, UK, Seiten 29/1-7, XP002052027
- ONOE S ET AL: "CONTROL CHANNEL STRUCTURE FOR TDMA MOBILE RADIO SYSTEMS" 40TH IEEE VEHICULAR TECHNOLOGY CONFERENCE, 6. - 9.Mai 1990, ORLANDO, Seiten 270-275, XP000204124
- FALCONER D D ET AL: "TIME DIVISION MULTIPLE ACCESS METHODS FOR WIRELESS PERSONAL COMMUNICATIONS" IEEE COMMUNICATIONS MAGAZINE, Bd. 33, Nr. 1, 1.Januar 1995, Seiten 50-57, XP000495891 in der Anmeldung erwähnt

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtgebunden ist oder auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z. B. nach Funkstandards wie DECT, GSM, WACS oder PACS, IS-54, PHS, PDC etc. [vgl. IEEE Communications Magazine, January 1995, Seiten 50 bis 57; D. D. Falconer et al:"Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht
(1) in Form eines Bildes,
(2) als gesprochenes Wort,
(3) als geschriebenes Wort,
(4) als verschlüsseltes Wort oder Bild
übertragen werden. Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Verfahren zum Übertragen von Daten in einem hybriden Telekommunikationssystem, insbesondere einem "ISDN ↔ DECT-spezifischen RLL/WLL"-System gemäß dem Oberbegriff des Patentanspruches 1.

Die in der Beschreibung erläuterten Figuren zeigen:
FIGUR 1 in Form eines Blockschaltbildes den prinzipiellen Aufbau eines hybriden Telekommunikationssystems,
FIGUR 2 die Zeitrahmen-/Zeitschlitzstruktur eines DECT-Systems,
FIGUR 3 ein OSI/ISO-Schichtenmodell für die C-Ebene des Telekommunikationssystems nach FIGUR 1,
FIGUR 4 ein OSI/ISO-Schichtenmodell für die U-Ebene des Telekommunikationssystems nach FIGUR 1,
FIGUR 5 Nachrichtenstrukturen von ISDN-Nachrichten - z. B. ISDN3-Nachrichten - mit unterschiedlichen Nachrichtenlangen,
FIGUR 6 ein Nachrichtenflußdiagramm für die Übertragung einer "langen" ISDN-Nachricht z. B. die "lange" ISDN3-Nachricht, in Senderichtung "DECT Intermediate Fixed System (DIFS) → DECT Intermediate Portable System (DIPS)" mit dem DIFS als Sendestation gemäß FIGUR 5,
FIGUR 7 ein Nachrichtenflußdiagramm für die Übertragung einer "langen" ISDN-Nachricht z. B. die "lange" ISDN3-Nachricht, in Senderichtung "DECT Intermediate Fixed System (DIFS) → DECT Intermediate Portable System (DIPS)" mit dem DIPS als Empfangsstation gemäß FIGUR 5,
FIGUR 8 Nachrichtenstrukturen von ISDN-Nachrichten - z. B. ISDN3-Nachrichten - mit unterschiedlichen Nachrichtenlängen, wobei die Nachrichtenstruktur der "langen" ISDN-Nachricht gegenüber der in FIGUR 5 modifiziert ist,
FIGUR 9 ein Nachrichtenflußdiagramm für die Übertragung einer "langen" ISDN-Nachricht z. B. die "lange", ISDN3-Nachricht, in Senderichtung "DECT Intermediate Fixed System (DIFS) → DECT Intermediate Portable System (DIPS)" mit dem DIFS als Sendestation gemäß FIGUR 8,
FIGUR 10 ein Nachrichtenflußdiagramm für die Übertragung einer "langen" ISDN-Nachricht z. B. die "lange" ISDN3-Nachricht, in Senderichtung "DECT Intermediate Fixed System (DIFS) → DECT Intermediate Portable System (DIPS)" mit dem DIPS als Empfangsstation gemäß FIGUR 8.

Hybride Telekommunikationssysteme sind z. B. unterschiedliche - drahtlose und/oder draht gebundene - Telekommunikationsteilsysteme enthaltende Nachrichtensysteme.

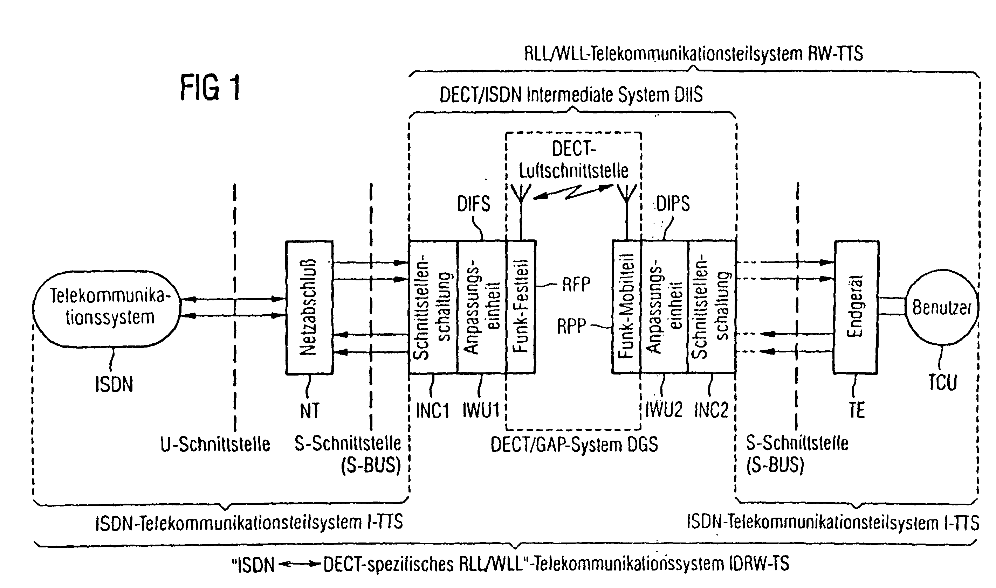

FIGUR 1 zeigt - stellvertretend für die Vielzahl der hybriden Telekommunikationssysteme - ausgehend von den Druckschriften "Nachrichtentechnik Elektronik, Berlin 45 (1995) Heft 1, Seiten 21 bis 23 und Heft 3, Seiten 29 und 30" sowie IEE Colloquium 1993, 173; (1993), Seiten 29/1 - 29/7; W. Hing, F. Halsall: "Cordless access to the ISDN basic rate service" auf der Basis eines DECT/ISDN Intermediate Systems DIIS gemäß der ETSI-Publikation prETS 300xxx, Version 1.09, 31. Juli 1996 ein "ISDN ↔ DECT-spezifisches RLL/WLL"-Telekommunikationssystem (Integrated Services Digital Network ↔ Radio in the Local Loop/Wireless in the Local Loop) mit einem ISDN-Telekommunikationsteilsystem I-TTS [vgl. Druckschrift "Nachrichtentechnik Elektronik, Berlin 41-43, Teil: 1 bis 10, T1: (1991) Heft 3, Seiten 99 bis 102; T2: (1991) Heft 4, Seiten 138 bis 143; T3: (1991) Heft 5, Seiten 179 bis 182 und Heft 6, Seiten 219 bis 220; T4: (1991) Heft 6, Seiten 220 bis 222 und (1992) Heft 1, Seiten 19 bis 20; T5: (1992) Heft 2, Seiten 59 bis 62 und (1992) Heft 3, Seiten 99 bis 102; T6: (1992) Heft 4, Seiten 150 bis 153; T7: (1992) Heft 6, Seiten 238 bis 241; T8: (1993) Heft 1, Seiten 29 bis 33; T9: (1993) Heft 2, Seiten 95 bis 97 und (1993) Heft 3, Seiten 129 bis 135; T10: (1993) Heft 4, Seiten 187 bis 190;"] und einem DECT-spezifischen RLL/WLL-Telekommunikationsteilsystem RW-TTS.

Das DECT/ISDN Intermediate System DIIS bzw. das RLL/WLL-Telekommunikationsteilsystem RW-TTS basiert dabei vorzugsweise auf einem **D**ECT/GAP-**S**ystem DGS [**D**igital **E**nhanced (früher: **E**uropean) **C**ordless **T**elecommunication; vgl. **(1):** Nachrichtentechnik Elektronik 42 (1992) Jan./Feb. Nr. 1, Berlin, DE; U. Pilger "Struktur des DECT-Standards", Seiten 23 bis 29 **in Verbindung mit** der ETSI-Publikation ETS 300175-1...9, Oktober . 1992; **(2)**: Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3)**: tec 2/93 - Das technische Magazin von Ascom "Wege zur universellen mobilen Telekommunikation", Seiten 35 bis 42; **(4)**: Philips Telecommunication Review Vol. 49, No. 3, September 1991, R. J. Mulder:" DECT, a universal cordless access system"; **(5)**: WO 93/21719 (FIG 1 bis 3 mit dazugehöriger Beschreibung)]. Der GAP-Standard (**G**eneric **A**ccess **P**rofile) ist eine Untermenge des DECT-Standards, dem die Aufgabe zukommt, die Interoperabilität der DECT-Luftschnittstelle für Telefonanwendungen sicherzustellen (vgl. ETSI-Publikation prETS 300444, April 1995).

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A. Mann: "Der GSM-Standard - Grundlage für digitale europäische Mobilfunknetze", Seiten 137 bis 152). Stattdessen ist es im Rahmen eines hybriden Telekommunkationssystems auch möglich, daß das ISDN-Telekommunikationsteilsystem I-TTS als GSM-System ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Sysceme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z. B. DECT-Kanälen) in klassischen leitungsgebundenen Telekommunikationssystemen, wie dem ISDN, gewinnt zunehmend an Bedeutung, insbesondere vor dem Hintergrund zukünftiger alternativer Netzbetreiber ohne eigenes komplettes Drahtnetz.

So sollen z. B. bei dem RLL/WLL-Telekommunikationsteilsystem RW-TTS die drahtlose Anschlußtechnik RLL/WLL (**R**adio in the **L**ocal **L**oop/**W**ireless in the **L**ocal **L**oop) z. B. unter der Einbindung des DECT-Systems DS dem ISDN-Teilnehmer ISDN-Dienste an Standard-ISDN-Schnittstellen verfügbar gemacht werden (vgl. FIGUR 1).

In dem "ISDN ↔ DECT-spezifischen RLL/WLL"-Telekommunikationssystem IDRW-TS nach FIGUR 1 ist ein Telekommunikationsteilnehmer (Benutzer) TCU (**T**ele-**C**ommunication **U**ser) mit seinem Endgerat TE (**T**erminal **E**ndpoint; **T**erminal **E**quipment) z. B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystem RW-TTS enthaltene - DECT-ISDN Intermediate System DIIS (erstes Telekommunikationsteilsystem), eine weitere standardisierte S-Schnittstelle (S-BUS), einen Netzabschluß NT (**N**etwork **T**ermination) und eine standardisierte U-Schnittstelle des ISDN-Telekommunikationsteilsystems I-TTS (zweites Telekommunikationsteilsystem) in die ISDN-Welt mit den darin verfügbaren Diensten eingebunden.

Das erste Telekommunikationsteilsystem DIIS besteht im wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z. B. über eine DECT-Luftschnittstelle, miteinander verbunden sind. Wegen der quasi-ortsgebundenen ersten Telekommunikationsschnittstelle DIFS bildet das erste Telekommunikationsteilsystem DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

Für ein DECT-spezifisches RLL-System als Träger für möglichst alle ISDN-Dienste im Teilnehmer-Anschluß bestehen dabei folgende allgemeinen Problemstellungen:
a) Nachbildung der ISDN-Kanal-Struktur (D-Kanal und 2 B-Kanäle), im folgenden insbesondere des D-Kanals,
b) gute Bandbreite-Ökonomie; für ISDN besonders bedeutsam, da einige Dienste bereits zwei DECT-Kanäle für die B-Kanal-Datenrate von 64 kbps benötigen,
c) minimaler technischer Aufwand.

### Nachbildung des D-Kanals

### Eigenschaften des D-Kanals:

- Gemeinsamer Signalisierungskanal auf der C-Ebene (C-plane) für alle an den ISDN-Anschluß angeschlossenen Endgeräte TE (**T**erminal **E**ndpoint).
- Die TE-spezifischen Signalisierungskanale zum Netz werden darin durch TE-individuelle Adressen TEI (**T**erminal **E**ndpoint **I**dentifier) separiert.
   Der Zugriffsmechanismus zum D-Kanal stellt TE-individuell die Reihenfolge der Nachrichten sicher.
- Durchsatzrate: 16 kbps
- Auslastung: abhangig von vielen Kriterien, in der Regel niedriger als Maximalkapazität; Stausituationen moglich, die jedoch wegen der hohen Kapazitat schnell abbaubar sind.

### DECT-Kanäle:

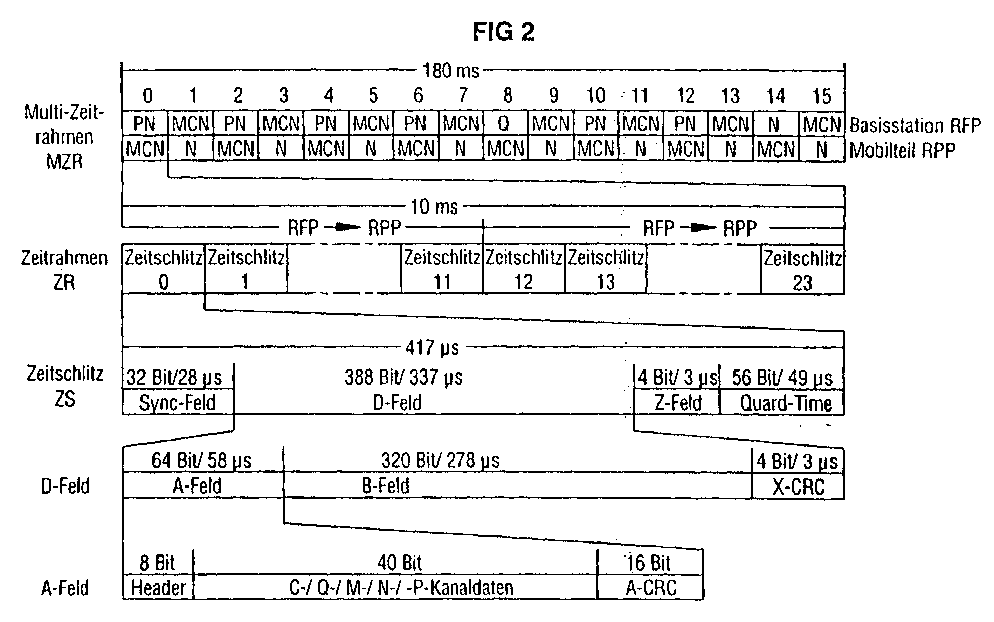

FIGUR 2 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300175-1...9, Oktober 1992" die TDMA-Struktur des DECT/GAP-Systems DGS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,90 GHz Funknachrichten nach dem TDMA-Prinzip gemäß FIGUR 2 in einer vorgegebenen zeitlichen Abfolge von der Basisstation RFP zum Mobilteil RPP und vom Mobilteil RPP zur Basisstation RFP (Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation RFP und Mobilteil RPP getrennt Informationen übertragen, die einen im DECT-Standard definierten C-,M-,N-,P-,Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0...11) für die Übertragungsrichtung "Basisstation RFP → Mobilteil RPP" und weitere 12 Zeitschlitze ZS (Zeitschlitze 12...23) für die Übertragungsrichtung "Mobilteil RPP → Basisstation RFP" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-, Q-, M-, N-; P-Kanäle und einem 16 Bit langen "A-CRC"-Wort zusammen.

### Eigenschaften:

- Verwendung von TDMA-Zeitschlitzen.
- Im Prinzip wird je Zeitschlitz ein Cₛ-Kanal (s = slow) zur Signalisierung [C-Ebene (C-plane) im DECT-Standard] und ein zugeordneter Kanal [U-Ebene (U-plane) im DECT-Standard] für die Benutzer- bzw. Nutzinformationen (Durchsatz: 32 kbps) verwendet.
- Durchsatz des Cₛ-Kanals: 2 kbps.
   Der DECT-Standard bietet auch andere Kanalstrukturen, z. B. einen C_{f}-Kanal (f = fast) an.
- Der C_{f}-Kanal belegt einen Zeitschlitz.
- Durchsatz des C_{f}-Kanals: 25.6 kbps.

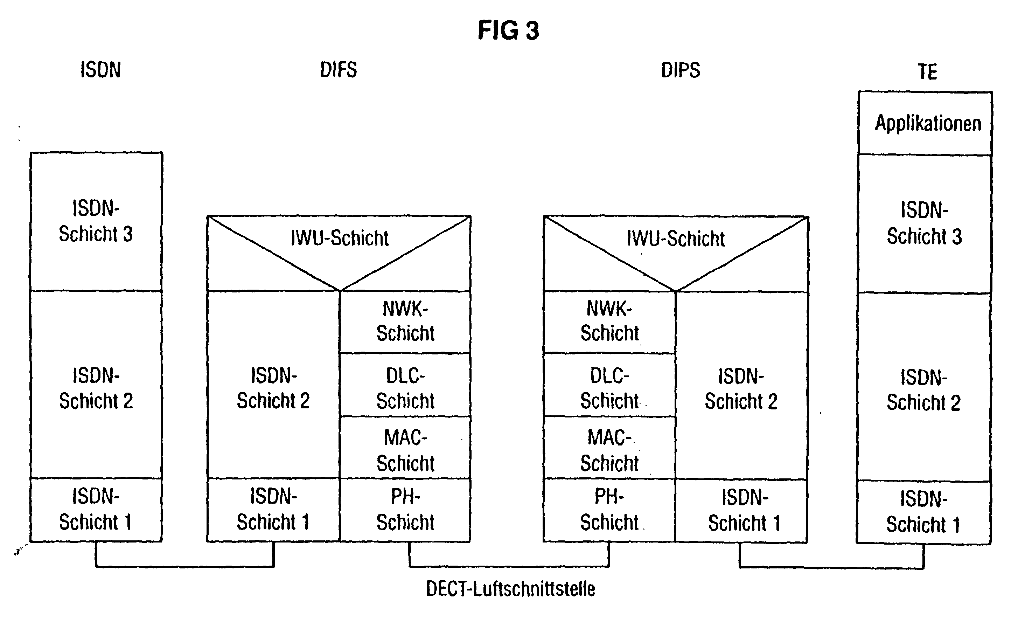

Figur 3 zeigt auf der Basis des OSI/ISO-Schichtenmodells [vgl. **(1):** Unterrichtsblätter - Deutsche Telekom Jg. 48, 2/1995, Seiten 102 bis 111; **(2):** ETSI-Publikation ETS 300175-1...9, Oktober 1992; **(3):** ETSI-Publikation ETS 300102, Februar 1992; **(4)**: ETSI-Publikation ETS 300125, September 1991; **(5)**: ETSI-Publikation ETS 300012, April 1992] ein Modell der C-Ebene des "ISDN ↔ DECT-spezifischen RLL/WLL"-Telekommunikationssystems IDRW-TS nach FIGUR 1.

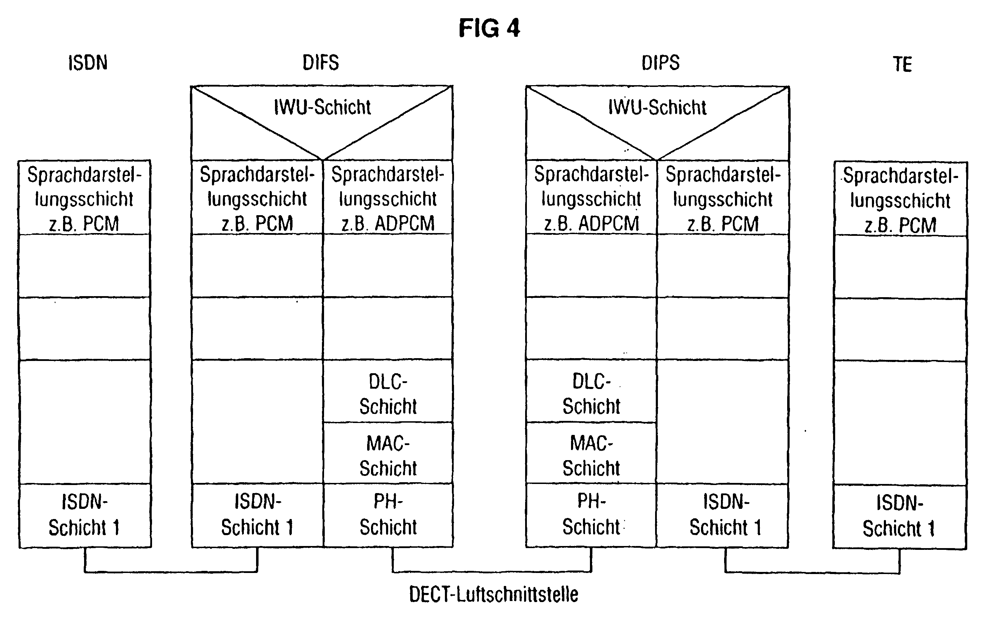

Figur 4 zeigt auf der Basis des OSI/ISO-Schichtenmodells [vgl. **(1)**: Unterrichtsblätter - Deutsche Telekom Jg. 48, 2/1995, Seiten 102 bis 111; **(2)**: ETSI-Publikation ETS 300175-1...9, Oktober 1992; **(3)**: ETSI-Publikation ETS 300102, Februar 1992;. **(4)**: ETSI-Publikation ETS 300125, September 1991; **(5)**: ETSI-Publikation ETS 300012, April 1992] ein Modell der U-Ebene für Sprachdatenübertragung des "ISDN ↔ DECT-spezifischen RLL/WLL"-Telekommunikationssystems IDRW-TS nach FIGUR 1.

Zwischen den einzelnen Protokollschichten (Nachrichtenübertragungsebenen) des Telekommunikationsteilsystems RLL/WLL nach FIGUR 3 müssen bei abgeschlossener "ISDN-Schicht 2" im weiteren z. B. unterschiedlich lange "ISDN-Schicht 3"-Nachrichten (im folgenden als ISDN3-Nachrichten bezeichnet) über die IWU-Protokollschicht des DECT Intermediate Fixed Systems DIFS zur IWU-Protokollschicht des DECT Intermediate Portable Systems DIPS übertragen werden ("logische" "IWU-To-IWU"-Übertragung). Für die "physikalische" Übertragung müssen dabei die einzelnen Protokollschichten des Telekommunikationsteilsystems RLL/WLL nach FIGUR 3 durchlaufen werden.

Bei der Übertragung von ISDN-Nachrichten in einem DECT-spezifischen RLL/WLL-System unterscheidet man ganz allgemein zwischen "kurzen" ISDN-Nachrichten, "mittleren" ISDN-Nachrichten und "langen" ISDN-Nachrichten.

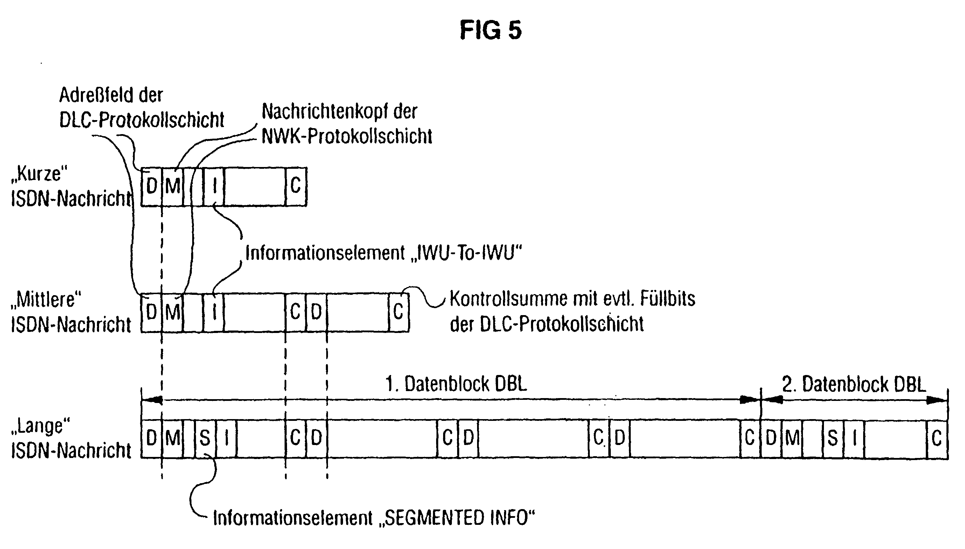

FIGUR 5 zeigt die für die "kurze" ISDN-Nachrichten, "mittlere" ISDN-Nachrichten und "lange" ISDN-Nachrichten spezifische Nachrichtenstruktur, mit denen diese zwischen den einzelnen Protokollschichten (Nachrichtenübertragungsebenen) des Telekommunikationsteilsystems RLL/WLL übertragen werden. Die Nachrichtenstruktur der drei ISDN-Nachrichten ,besteht bis auf ein Strukturelement aus gemeinsamen Strukturelementen. Die gemeinsamen Strukturelemente sind ein Adreßfeld der DLC-Protokollschicht (D), ein Nachrichtenkopf der NWK-Protokollschicht (M), eine Kontrollsumme mit evtl. Füllbits der DLC-Protokollschicht (C) und ein die zu übertragenen Daten enthaltenen Informationselement "IWU-To-IWU" (I). Das nichtgemeinsame Strukturelement ist ein Informationselement "SEGMENTED INFO" (S), das - wie die FIGUR 5 zeigt - ausschließlich bei den "langen" ISDN-Nachrichten verwendet wird.

Im weiteren ist nur die Nachrichtenstruktur der "langen" ISDN-Nachricht von Interesse. Eine "lange" ISDN-Nachricht wird definitionsgemäß dann als "lang" bezeichnet, wenn diese nicht in einer einzigen, auf das Informationselement "IWU-To-IWU" (vgl. ETSI-Publikation ETS 300175-5, Oktober 1992, Kap. 7.7.23) basierenden "IWU-To-IWU"-Nachricht übertragen werden kann. Im vorliegenden Fall ist die "lange" ISDN3-Nachricht mit ca. 260 Bit-Oktetts bzw. Bytes etwas größer als die mit dem Informationselement "IWU-To-IWU" in etwa maximal übertragbaren 248 Bit-Oktetts bzw. Bytes.

Um solche "lange" ISDN-Nachrichten aber dennoch übertragen zu können, ist es bekannt, das Informationselement "SEGMENTED INFO" zu verwenden (vgl. **(1)**: ETSI-Publikation 300xxx; Version 1.09; 31. Juli 1996; DECT/ISDN Intermediate System, Kap. 6.5.1.5; **(2)**: ETSI-Publikation ETS 300175-5, Oktober 1992, Kap. 7.7.37). Die Verwendung dieses Informationselementes hat jedoch zur Folge, daß die "lange" ISDN3-Nachricht (ISDN3-Daten) mit den vorstehend angegebenen gemeinsamen Strukturelementen gemäß FIGUR 5 in zwei Datenblöcke DBL übertragen wird.

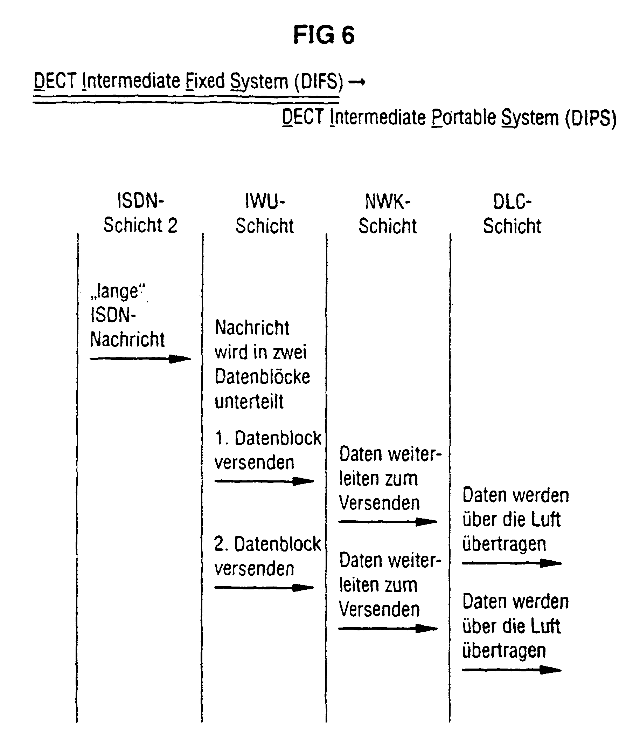

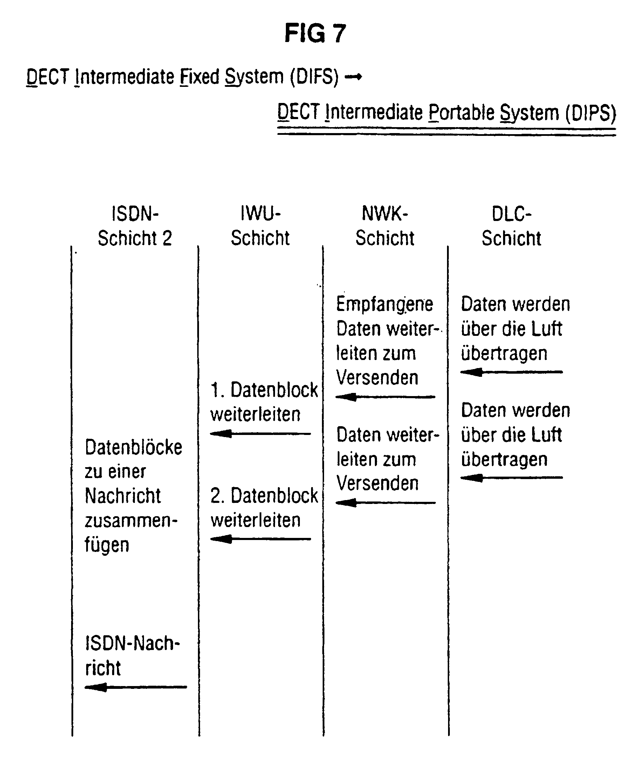

FIGUREN 6 und 7 zeigen ausgehend von den FIGUREN 3 und 5 für die Senderichtung "DECT Intermediate Fixed System (DIFS) → DECT Intermediate Portable System (DIPS)" Nachrichtenflußdiagramme, die die Übertragungsverhältnisse im Zusammenhang mit der Übertragung der ISDN3-Nachricht in dem DIFS als Sendestation [FIGUR 6; doppelte Unterstreichung von DECT Intermediate Fixed System (DIFS)] und die Übertragungsverhältnisse im Zusammenhang mit der Übertragung der ISDN3-Nachricht in dem DIPS als Empfangsstation [FIGUR 7; doppelte Unterstreichung von DECT Intermediate Portable System (DIPS)] darstellen. Das gleiche Szenario ist auch für die umgekehrte Übertragungsrichtung "DECT Intermediate Portable System (DIPS) → DECT Intermediate Fixed System (DIFS)" möglich, wenn die ISDN3-Nachricht nicht wie im vorliegenden Fall eine netzseitige Nachricht, sondern eine terminalseitige Nachricht ist.

Gemäß FIGUR 6 wird in dem DECT Intermediate Fixed System DIFS die "lange" ISDN-Nachricht - z. B. die "lange" ISDN3-Nachricht - von der "ISDN-Schicht 2" zur IWU-Schicht übertragen. In der IWU-Schicht werden diese Nachrichten in zwei Datenblöcke, einen ersten Datenblock und einen zweiten Datenblock, unterteilt und die beiden Datenblöcke an die NWK-Schicht übergeben. Die NWK-Schicht leitet die in den Datenblöcken enthaltenen Daten an die DLC-Schicht weiter. In der DLC-Schicht werden die von der NWK-Schicht erhaltenen Daten über die Luft übertragen.

Gemäß FIGUR 7 werden in dem DECT Intermediate Portable System DIPS die von dem DECT Intermediate Fixed System DIFS über die Luft übertragenen Daten von der DLC-Schicht empfangen und an die NWK-Schicht weitergegeben. Die NWK-Schicht leitet diese Daten an die IWU-Schicht weiter. In der IWU-Schicht werden diese Daten in einem ersten Datenblock und einem zweiten Datenblock an die "ISDN-Schicht 2" weitergeleitet. In der "ISDN-Schicht 2" werden die beiden Datenblöcke zu einer Nachricht (ISDN-Nachricht) zusammengefügt.

Die Übertragung der ISDN3-Nachrichten in dem RLL/WLL-System bei Verwendung des Informationselementes "SEGMENTED INFO" ist wegen der Tatsache, daß die Daten in zwei Datenblöcke übertragen werden müssen, unbefriedigend.

Die der Erfindung zugrundeliegende Aufgabe besteht darin, in einem hybriden Telekommunikationssystem, insbesondere einem "ISDN ↔ DECT-spezifischen RLL/WLL"-System eine variierende Datenmenge zwischen Nachrichtenübertragungsebenen von Telekommunikationsschnittstellen des hybriden Telekommunikationssystems jeweils mit geringsten Übertragungsaufwand in den Nachrichtenübertragungsebenen optimal übertragen zu können.

Diese Aufgabe wird ausgehend von dem im Oberbegriff des Patentanspruches 1 definierten Verfahren durch die in dem Kennzeichen angegebenen Merkmale gelöst.

Die der Erfindung zugrundeliegende Idee besteht darin, daß in einem Telekommunikationssystem mit einem als lokale Nachrichtenübertragungsschleife dienenden Telekommunikationsteilsystem (hybrides Telekommunikationssystem) der eingangs angegebenen Art die in dem Telekommunikationsteilsystem durch die lokale Einbindung in das Telekommunikationssystem zu übertragenden systemspezifischen Nachrichten (Daten) auch dann in einem einzigen zusammenhängenden Datenblock zwischen Nachrichtenübertragungsebenen des Telekommunikationsteilsystems übertragen werden können, wenn die systemspezifische Datenmenge eine zwischen gleichen Nachrichtenübertragungsebenen des Telekommunikationsteilsystems maximal übertragbare teilsystemspezifische Datenmenge übersteigt.

Dadurch, daß nur noch ein Datenblock statt mehrere Datenblökke für die Übertragung erforderlich ist, werden einerseits insbesondere der Segmentierungsaufwand in der jeweils betreffenden Nachrichtenübertragungsebene geringer und andererseits insbesondere die Implementierung der Nachrichtenübertragungsebenen einfacher.

Weitere vorteilhafte Weiterbildungen der Erfindung sind in den Unteransprüchen angegeben.

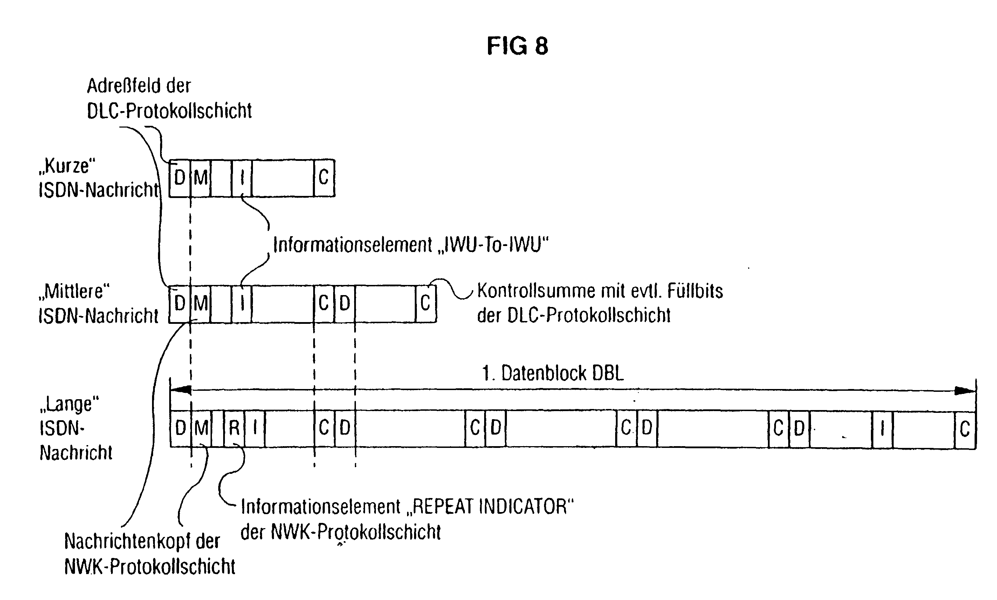

Ein Ausführungsbeispiel der Erfindung wird anhand der FIGUREN 8 bis 10 erläutert. Es zeigen:
FIGUR 8 Nachrichtenstrukturen von ISDN-Nachrichten - z. B. ISDN3-Nachrichten - mit unterschiedlichen Nachrichtenlängen, wobei die Nachrichtenstruktur der "langen" ISDN-Nachricht gegenüber der in FIGUR 5 modifiziert ist,

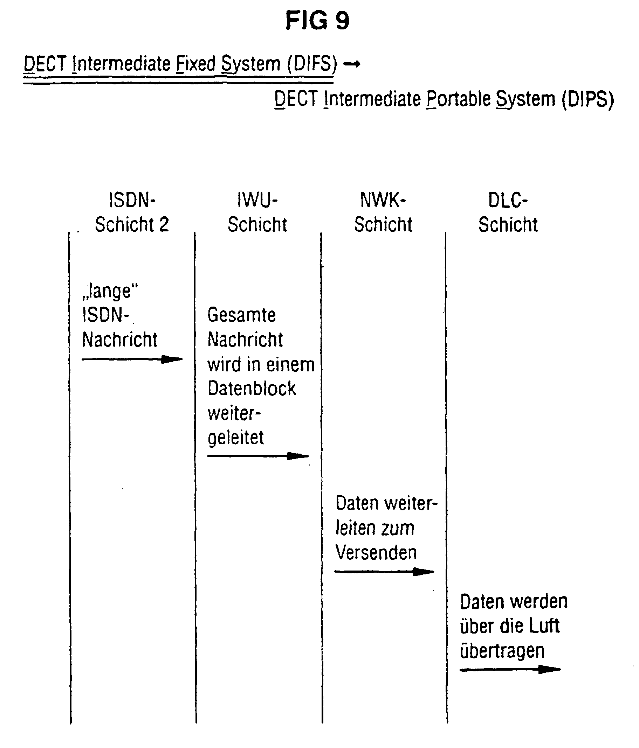

FIGUR 9 ein Nachrichtenflußdiagramm für die Übertragung einer "langen" ISDN-Nachricht z. B. die "lange" ISDN3-Nachricht, in Senderichtung "DECT Intermediate Fixed System (DIFS) → DECT Intermediate Portable System (DIPS)" mit dem DIFS als Sendestation gemäß FIGUR 8,

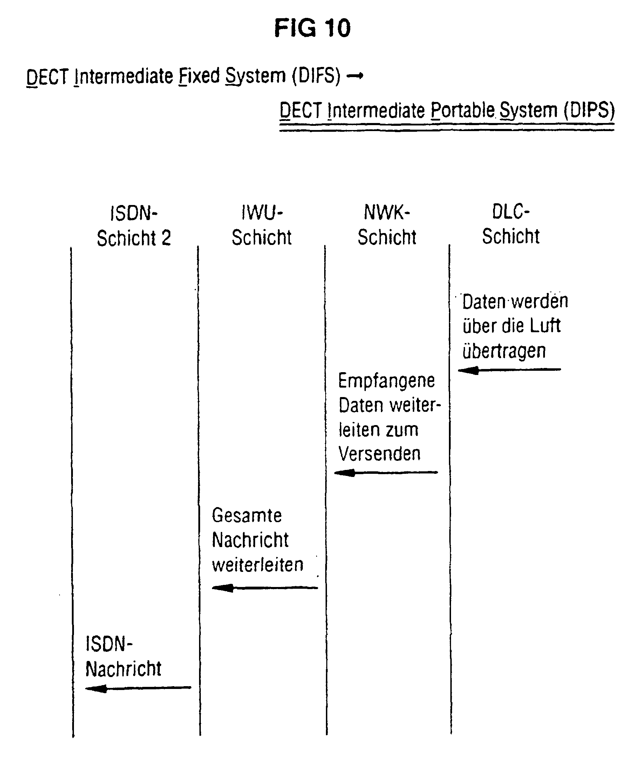

FIGUR 10 ein Nachrichtenflußdiagramm für die Übertragung einer "langen" ISDN-Nachricht z. B. die "lange" ISDN3-Nachricht, in Senderichtung "DECT Intermediate Fixed System (DIFS) → DECT Intermediate Portable System (DIPS)" mit dem DIPS als Empfangsstation gemäß FIGUR 8.

FIGUR 8 zeigt ausgehend von FIGUR 5 eine modifizierte Nachrichtenstruktur für "lange" ISDN-Nachrichten, mit der diese zwischen den einzelnen Protokollschichten (Nachrichtenübertragungsebenen) des Telekommunikationsteilsystems RLL/WLL nach FIGUR 3 übertragen werden. Statt des Informationselementes "SEGMENTED INFO" wird ein im DECT-Standard ebenfalls definiertes Informationselement (vgl. ETSI-Publikation ETS 300175-5, Oktober 1992, Kap. 7.6.3), das Informationselement "REPEAT INDICATOR" herangezogen. Die Verwendung des Informationselementes "REPEAT INDICATOR" hat zur Folge, daß die "lange" ISDN3-Nachricht in einem einzigen Datenblock DBL übertragen werden kann. Durch das Informationselement "REPEAT INDICATOR" wird das Hintereinanderfügen - im vorliegenden Fall - von zwei Informationselementen "IWU-To-IWU" in einem einzigen Datenblock angegeben. Durch die Verwendung des Wiederholungsindikators (Informationselement "REPEAT INDICATOR") werden gegenüber der Lösung mit dem Informationselement "SEGMENTED INFO" der Segmentierungsaufwand in der IWU-Protokollschicht geringer und die Implementierung der DLC-Protokollschicht einfacher. Darüber hinaus ensteht durch die Verwendung des Wiederholungsindikators ein geringerer Überhang (Overhead) von Daten, weil die Bitlänge des Informationselementes "REPEAT INDICATOR" kleiner als die des Informationselementes "SEGMENTED INFO" ist und zudem das bei der Verwendung des Informationselementes "SEGMENTED INFO" zusätzlich benötigte Strukturelement "Nachrichtenkopf der NWK-Protokollschicht (M)" wegfällt.

FIGUREN 9 und 10 zeigen ausgehend von den FIGUREN 6 bis 8 für die Senderichtung "DECT Intermediate Fixed System (DIFS) → DECT Intermediate Portable System (DIPS)" Nachrichtenflußdiagramme, die die Übertragungsverhältnisse im Zusammenhang mit der Übertragung der ISDN3-Nachricht in dem DIFS als Sendestation [FIGUR 9; doppelte Unterstreichung von DECT Intermediate Fixed System (DIFS)] und die Übertragungsverhältnisse im Zusammenhang mit der Übertragung der ISDN3-Nachricht in dem DIPS als Empfangsstation [FIGUR 10; doppelte Unterstreichung von DECT Intermediate Portable System (DIPS)] darstellen. Das gleiche Szenario ist auch hier wieder für die umgekehrte Übertragungsrichtung "DECT Intermediate Portable System (DIPS) → DECT Intermediate Fixed System (DIFS)" möglich, wenn die ISDN3-Nachricht nicht wie im vorliegenden Fall eine netzseitige Nachricht, sondern eine terminalseitige Nachricht ist.

Gemäß FIGUR 9 wird in dem DECT Intermediate Fixed System DIFS die "lange" ISDN-Nachricht - z. B. die "lange" ISDN3-Nachricht - von der "ISDN-Schicht 2" zur IWU-Schicht übertragen. In der IWU-Schicht wird diese Nachricht als gesamte Nachricht in einem Datenblock an die NWK-Schicht weitergeleitet. Die NWK-Schicht leitet die in dem Datenblock enthaltenen Daten an die DLC-Schicht weiter. In der DLC-Schicht werden die von der NWK-Schicht erhaltenen Daten über die Luft übertragen.

Gemäß FIGUR 10 werden in dem DECT Intermediate Portable System DIPS die von dem DECT Intermediate Fixed System DIFS über die Luft übertragenen Daten von der DLC-Schicht empfangen und an die NWK-Schicht weitergegeben. Die NWK-Schicht leitet diese Daten an die IWU-Schicht weiter. In der IWU-Schicht werden diese Daten als gesamte Nachricht an die "ISDN-Schicht 2" weitergeleitet. In der "ISDN-Schicht 2" wird diese Nachricht als ISDN-Nachricht weitergeleitet.

## Patentansprüche

1. Verfahren zum Übertragen von Daten in einem hybriden Telekommunikations-system, insbesondere einem "ISDN - DECT-spezifischen RLL/WLL"-System,
a) wobei das hybride Telekommunikationssystem
ein *erstes* Telekommunikationsteilsystem (ISDN) und
ein *zweites* Telekommunikationsteilsystem (DIIS) enthält,
b) wobei das *zweite* Telekommunikationsteilsystem (DIIS)
zur Übertragung von ersten Teilsystemnachrichten des ersten Telekommunikationsteilsystems und
zur Übertragung von zweiten Teilsystemnachrichten des zweiten Telekommunikationsteilsystems
eine *erste* Telekommunikationsschnittstelle (DIFS) und
eine *zweite* Telekommunikationsschnittstelle (DIPS) mit jeweils mehreren Nachrichtenübertragungsebenen aufweist,
c) wobei das zweite Telekommunikationsteilsystem (DIIS) über die Telekommunikationsschnittstellen (DIFS, DIPS) als lokale Nachrichtenübertragungsschleife in das erste Telekommunikationsteilsystem (ISDN) eingebunden ist,
d) bei dem eine zwischen gleichen ersten Nachrichtenübertragungsebenen der Telekommunikationsschnittstellen (DIFS, DIPS) nach einem übertragungsebenenspezifischen Übertragungsformat zu übertragende **erste Datenmenge** der ersten Teilsystemnachrichten übertragen wird, die eine durch das Übertragungsformat **maximal übertragbare zweite Datenmenge** übersteigt,
**dadurch gekennzeichnet, daß**
ein übertragungsebenenspezifisches Informationselement in Abhängigkeit von der ersten Datenmenge mindestens zweimal hintereinander für die Übertragung der ersten Datenmenge derart übertragen wird, daß die **erste Datenmenge** in einem *einzigen,* zwischen den Nachrichtenübertragungsebenen übertragenen Datenblock (DBL) übertragen wird.

2. Verfahren nach Anspruch 1, **dadurch gekennzeichnet,**
**daß** für die mindestens zweifache Verwendung des Informationselementes ein Wiederholungsindikator benutzt wird.

3. Verfahren nach Anspruch 1 oder 2, **dadurch gekennzeichnet,**
**daß** das erste Telekommunikationsteilsystem (ISDN) ein ISDN-System ist.

4. Verfahren nach einem der Ansprüche 1 bis 3, **dadurch gekennzeichnet,**
**daß** das zweite Telekommunikationsteilsystem (DIIS) ein DECT-System ist.

5. Verfahren nach einem der Ansprüche 1 bis 3, **dadurch gekennzeichnet,**
**daß** das zweite Telekommunikationsteilsystem (DIIS) ein GSM-System ist.

6. Verfahren nach einem der Ansprüche 1 bis 3, **dadurch gekennzeichnet,**
**daß** das zweite Telekommunikationsteilsystem (DIIS) ein PHS-System, ein WACS-System oder ein PACS-System ist.

7. Verfahren nach einem der Ansprüche 1 bis 3, **dadurch gekennzeichnet,**
**daß** das zweite Telekommunikationsteilsystem (DIIS) ein "IS-54"-System oder ein PDC-System ist.

8. Verfahren nach einem der Ansprüche 1 bis 3, **dadurch gekennzeichnet,**
**daß** das zweite Telekommunikationsteilsystem (DIIS) ein CDMA-System, ein TDMA-System, ein FDMA-System oder ein bezüglich der genannten Übertragungsstandards hybrides System ist.

9. Verfahren nach einem der Ansprüche 1 bis 8, **dadurch gekennzeichnet, daß**
die erste Telekommunikationsschnittstelle (DIFS) ein DECT INTERMEDIATE FIXED SYSTEM und
die zweite Telekommunikationsschnittstelle (DIPS) ein DECT INTERMEDIATE PORTABLE SYSTEM ist.

10. Verfahren nach Anspruch 3, **dadurch gekennzeichnet,**
**daß** die erste Datenmenge eine "ISDN-Schicht 3"-Datenmenge ist.

11. Verfahren nach Anspruch 4, **dadurch gekennzeichnet, daß**
das Informationselement das DECT-spezifische "IWU-To-IWU" Element ist.

12. Verfahren nach Anspruch 1, **dadurch gekennzeichnet, daß**
die erste Nachrichtenübertragungsebene die IWU-Schicht nach dem OSI/ISO-Schichtenmodell ist.

## Claims

1. Method for transmission of data in a hybrid telecommunication system especially an "ISDN - DECT-specific RLL/WLL" system,
a) where the hybrid telecommunication system contains a first telecommunication subsystem (ISDN) and a second telecommunication subsystem (DIIS),
b) where the second telecommunication subsystem (DIIS) for transmission of first subsystem messages of the first telecommunication subsystem and for transmission of second subsystem messages of the second telecommunication subsystem
, features a first telecommunication interface (DIFS) and a second telecommunication interface (DIPS) each with a number of message tranmission layers,
c) where the second telecommunication subsystem (DIIS) is linked via the telecommunication interfaces (DIFS, DIPS) as a local telecommunication loop into the first telecommunication subsystem (ISDN),
d) in which a **first volume of data** of the first subsystem messages to be transmitted according to a protocol-specific transmission format which exceeds a **maximum transmittable second volume of data** which can be transmitted by the transmission format is transmitted between same first message transmission layers of the telecommunication interfaces (DIFS; DIPS),
**characterized in that**
a protocol-specific information element is transmitted at least twice consecutively for the first volume of data depending on the first volume of data, such that the first volume of data is transmitted in a single data block (DBL) transmitted between the message transmission layers.

2. Method in accordance with Claim 1, **characterized in that**, a repeat indicator is employed for the at least double usage of the information element.

3. Method in accordance with Claim 1 or 2, **characterized in that**, the first telecommunication subsystem (ISDN) is an ISDN system.

4. Method in accordance with one of the Claims 1 to 3, **characterized in that** the second telecommunication subsystem (DIIS) is a DECT system.

5. Method in accordance with one of the Claims 1 to 3, **characterized in that** the second telecommunication subsystem (DIIS) is a GSM system.

6. Method in accordance with one of the Claims 1 to 3, **characterized in that** the second telecommunication subsystem (DIIS) is a PHS system, a WACS system or a PACS system.

7. Method in accordance with one of the Claims 1 to 3, **characterized in that** the second telecommunication subsystem (DIIS) is an "IS-54" system or a PDC system.

8. Method in accordance with one of the Claims 1 to 3, **characterized in that**, the second telecommunication subsystem (DIES) is a CDMA system, a TDMA system, an FDMA system or hybrid system as regards the given transmission standard.

9. Method in accordance with one of the Claims 1 to 8, **characterized in that** the first telecommunication interface (DIFS) is a DECT INTERMEDIATE FIXED SYSTEM and the second telecommunication interface (DIPS) is a DECT INTERMEDIATE PORTABLE SYSTEM.

10. Method in accordance with Claim 3, **characterized in that** the first data volume is an "ISDN layer 3" data volume.

11. Method in accordance with Claim 4, **characterized in that** the information element is the DECT-ATM-specific "IWU-To-1WU" element.

12. Method in accordance with Claim 1, **characterized in that** the first message transmission layer is the IWU layer according to the OSI/ISO layer model.

## Revendications

1. Procédé de transmission de données dans un système de télécommunications hybride, en particulier dans un système «ISDN - RLL/WLL spécifique au DECT»,
a) le système de télécommunications hybride comprenant un premier système partiel de télécommunications (ISDN) et un deuxième système partiel de télécommunications (DIIS),
b) le deuxième système partiel de télécommunications (DIIS) présentant, aux fins de la transmission de premiers messages de système partiel du premier système partiel de télécommunications et aux fins de la transmission de deuxièmes messages de système partiel du deuxième système partiel de télécommunications, une première interface de télécommunications (DIFS) et une deuxième interface de télécommunications (DIPS) avec respectivement plusieurs niveaux de transmission de messages,
c) le deuxième système partiel de télécommunications (DIIS) étant intégré dans le premier système partiel de télécommunications (ISDN) par l'intermédiaire des interfaces de télécommunications (DIFS, DIPS) en tant que boucle locale de transmission de messages,
d) dans lequel est transmis un premier ensemble de données des premiers messages de système partiel, à transmettre entre de mêmes premiers niveaux de transmission de messages des interfaces de télécommunications (DIFS, DIPS) selon un format de transmission spécifique aux niveaux de transmission, lequel ensemble de données est supérieur à un deuxième ensemble de données maximalement transmissible par le format de transmission,
**caractérisé en ce que** un élément d'information spécifique aux niveaux de transmission est transmis en fonction du premier ensemble de données au moins deux fois successives aux fins de la transmission du premier ensemble de données de manière telle que le premier ensemble de données est transmis dans un unique bloc de données (DBL) transmis entre les niveaux de transmission de messages.

2. Procédé selon la revendication 1, **caractérisé en ce qu'**un indicateur de répétition est utilisé pour l'utilisation au moins double de l'élément d'information.

3. Procédé selon la revendication 1 ou 2, **caractérisé en ce que** le premier système partiel de télécommunications (ISDN) est un système ISDN.

4. Procédé selon l'une des revendications 1 à 3, **caractérisé en ce que** le deuxième système partiel de télécommunications (DIIS) est un système DECT.

5. Procédé selon l'une des revendications 1 à 3, **caractérisé en ce que** le deuxième système partiel de télécommunications (DIIS) est un système GSM.

6. Procédé selon l'une des revendications 1 à 3, **caractérisé en ce que** le deuxième système partiel de télécommunications (DIIS) est un système PHS, un système WACS ou un système PACS.

7. Procédé selon l'une des revendications 1 à 3, **caractérisé en ce que** le deuxième système partiel de télécommunications (DIIS) est un système «IS-54» ou un système PDC.

8. Procédé selon l'une des revendications 1 à 3, **caractérisé en ce que** le deuxième système partiel de télécommunications (DIIS) est un système CDMA, un système TDMA, un système FDMA ou un système hybride par rapport auxdites normes de transmission.

9. Procédé selon l'une des revendications 1 à 8, **caractérisé en ce que** la première interface de télécommunications (DIFS) est un DECT INTERMEDIATE FIXED SYSTEM et la deuxième interface de télécommunications (DIPS) est un DECT INTERMEDIATE PORTABLE SYSTEM.

10. Procédé selon la revendication 3, **caractérisé en ce que** le premier ensemble de données est un ensemble de données de «couche 3 du ISDN».

11. Procédé selon la revendication 4, **caractérisé en ce que** l'élément d'information est l'élément «IWU-To-IWU» spécifique au DECT.

12. Procédé selon la revendication 1, **caractérisé en ce que** le premier niveau de transmission de messages est la couche IWU selon le modèle en couches OSI/ISO.
